# FASCICULE DE BREVET EUROPEEN

(11) **EP 1 879 412 B1**
(45) Date de publication et mention de la délivrance du brevet: **16.01.2013**
(21) Numéro de dépôt: 07013686.6
(22) Date de dépôt: 12.07.2007
(51) Int. Cl.: H04W 74/04

(54) **Système de téléphonie mobile directe**
Direkt-modus Mobilfunkverfahren
Direct-mode mobile phone system

(30) Priorité: 12.07.2006 FR 0606394
(43) Date de publication de la demande: 16.01.2008
(73) Titulaire: SAGEMCOM ENERGY & TELECOM SAS, 92500 Rueil-Malmaison (FR)
(72) Inventeur: Dorion-Cousinat, Marc, 69009 Lyon (FR); De Graeve, Frédéric, 75017 Paris (FR); Dumont, Jérémie, 91190 Gif Sur Yvette (FR)
(74) Mandataire: Maillet, Alain

(56) Documents cités:
- EP-A- 0 677 930
- WO-A-00/59138
- WO-A-2006/090070
- FR-A1- 2 844 953
- LABORATOIRE INTERFACES CAPTEURS & MICROÉLECTRONIQUE: "Présentation structure de trames GSM"[Online] 31 mai 2005 (2005-05-31), pages 1-47, XP002449158 Université de Metz Extrait de l'Internet: URL:http://www.licm.sciences.univ-metz.fr/ IMG/pdf/3_-_Trame_TDMA.pdf> [extrait le 2007-09-03]

## Description

La présente invention concerne un système de téléphonie mobile directe du type où chaque appel est émis par une station émettrice sur une fréquence porteuse. Elle concerne également un signal émis par une station mobile et reçu par au moins une station mobile réceptrice.

La présente invention est décrite par la suite dans le cas d'un système de téléphonie mobile à accès multiple par division dé temps du type où les données utilisateur sont émises par les stations mobiles émettrices dans des multitrames utilisateur constituées des intervalles de temps de même ordre d'une pluralité de trames successives et où les données de calage en fréquence et de synchronisation en temps sont également émises par les stations mobiles émettrices dans une multitrame système. La présente invention n'est cependant pas limitée aux systèmes de téléphonie mobile directe du type à accès multiple par division de temps.

On rappelle ci-dessous le fonctionnement d'un système de téléphonie mobile à accès multiple par division de temps (Time Division Multiple Access) qui utilise une structure en multitrames. On considèrera également le cas particulier d'un système GSM (Global System for Mobile communication) afin de préciser ce fonctionnement. On entend par système GSM dans la suite de la présente description un système de téléphonie mobile qui est basé sur les normes GSM connues de l'homme du métier.

Dans un système de téléphonie mobile à accès multiple par division de temps, les données échangées sont transmises sous forme de données numériques dans des intervalles de temps (time slots). On utilisera le terme *slot* pour désigner un tel intervalle de temps car c'est le terme qui est utilisé par l'homme du métier. On l'écrira en italique pour toutefois marquer son origine anglosaxone.

L'accès multiple par division de temps (TDMA) permet à différents utilisateurs de partager, au cours du temps, l'utilisation d'une bande de fréquence donnée, partage qui est défini par une trame dite trame TDMA qui fixe la disposition temporelle des *slots.*

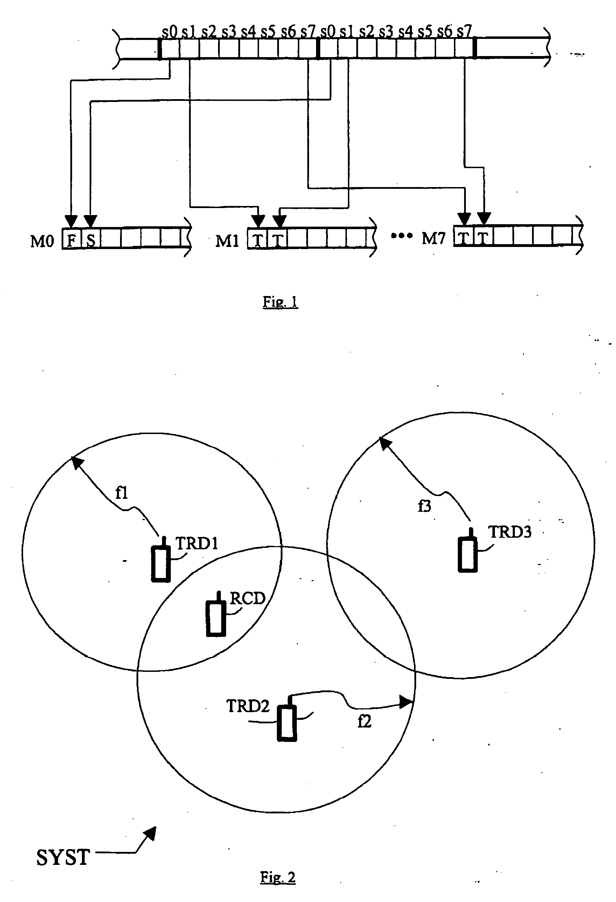

La trame TDMA est, dans le cas particulier d'un système GSM, un ensemble constitué de huit *slots* successifs notés s0 à s7 à la Fig. 1. Une multitrame Mⱼ à NT *slots* de trames est une structure qui est souvent utilisée pour permettre de repérer un *slot* sur une échelle supérieure à la durée de la trame TDMA. Cette structure est définie sur une succession de *slots* sⱼ d'un même rang donné j de NT trames TDMA successives, c'est-à-dire sur un canal physique. Comme illustré à la Fig. 1, les *slots* s₀ de trames successives forment la multitrame M₀, les *slots* s₁ de trames successives forment la multitrame M₁, etc.

Dans le cas particulier d'un système GSM, i1 existe deux structures de multitrame Mⱼ : celle regroupant un multiple de 26 *slots* sⱼ (multitrame 26 ou 104) et celle regroupant un multiple de 51 *slots* sⱼ (multitrame 51 ou 102). Les multitrames 26 sont notamment utilisées pour l'émission des données utilisateurs, tandis que les multitrames 51 sont notamment utilisées pour l'émission des données de calage en fréquence et de synchronisation. Sont également définies dans les spécifications du système GSM, des structures de supertrame formées d'une pluralité de multitrames et d'hypertrame formée d'une pluralité de supertrames.

De plus, dans le cas particulier d'un système GSM, pour permettre à une station mobile de se raccorder à la station de base la plus favorable, de s'y caler en fréquence et de s'y synchroniser, une voie balise, portée par la seule multitrame M₀ d'une fréquence particulière parmi toutes les fréquences disponibles, est également mise en oeuvre. Nous appellerons dans la suite de la description multitrame système ce type de multitrame.

On rappelle ici que cette voie balise est émise, par chaque station de base du système, sur une fréquence particulière, dite fréquence balise, choisie parmi l'ensemble des fréquences porteuses attribuées à la station mobile concernée.

La voie balise d'un système GSM comprend les canaux logiques suivants émis en diffusion : le canal FCCH (Frequency Correction CHannel), le canal SCH (Synchronisation CHannel) et le canal BCCH (Broadcast Control CHannel). Le canal FCCH est émis au cours du *slot* s₀ de quelques trames prédéfinies, par exemple les seules trames 0, 10, 20, 30 et 40 d'une multitrame à 51 trames (marqué F à la Fig. 1). Le canal SCH est émis au cours du *slot* s₀ de la trame qui suit celle où a été émis le canal FCCH, par exemple dans les seules trames 1, 11, 21, 31 et 41 d'une multitrame à 51 trames (marqué S à la Fig. 1).

Dans un système GSM, pour la transmission des données utilisateur, une station mobile dispose de deux *slots* respectivement émis sur deux porteuses de fréquences différentes : l'une affectée à la transmission dans le sens montant (station mobile vers station de base) et l'autre affectée à la transmission dans le sens descendant (station de base vers station mobile). Ces données utilisateur (marqués T à la Fig. 1) peuvent être des données utiles et elles sont alors transmises dans des canaux logiques appelés TCH (Traffic CHannel) ou être des données de signalisation et elles sont alors transmises dans des canaux logiques appelés SDCCH. Des canaux logiques de contrôle peuvent accompagner ces canaux logiques : SACCH (Slow Associated Control CHannel) et FACCH (Fast Associated Control CHannel). Ces données étant spécifiques à l'utilisateur, les canaux logiques qui les portent sont dits canaux dédiés. Tous ces canaux logiques dédiés sont portés par les multitrames M₀ à M₇ (exceptée la multitrame M₀ de la fréquence balise) que nous nommerons, dans la suite de la présente description, multitrames utilisateur. Par abus de langage, on qualifiera également par la suite ces multitrames de réservées lorsque les canaux logiques dédiés qu'elles portent transmettent des données correspondantes à un appel en cours.

Dans un système GSM, lorsqu'elle est mise sous tension, une station mobile scrute l'ensemble des fréquences porteuses qu'elle reçoit pour y chercher un signal qui correspond à un canal FCCH. Une fois celui-ci trouvé, elle peut, d'une part, ajuster la fréquence de la porteuse reçue, mais aussi, d'autre part, en déduire une position temporelle dans l'hypertrame, si bien qu'elle peut se caler sur la trame reçue sur cette fréquence porteuse. Elle peut alors lire, à la trame suivante, dans le *slot* s0 correspondant, le canal SCH dans lequel elle trouvera toutes les données nécessaires pour parfaire son calage et sa synchronisation temporelle sur les trames. Elle peut alors lire le canal BCCH qui la renseignera sur les caractéristiques dé la station de base avec laquelle elle est synchronisée et les méthodes pour y accéder, ainsi que les caractéristiques et méthodes des stations de base voisines.

Dans cet état, la station mobile peut déclencher l'établissement d'une connexion, normalement par accès au canal commun RACH ou répondre à un signal de paging présent sur le canal PCH.

Une fois l'appel établi, la station mobile reçoit les canaux FCCH, SCH et BCCH non seulement de la station de base avec laquelle elle est raccordée mais aussi des stations de base voisines. Elle peut ainsi, selon les circonstances, se raccorder à la station de base la plus favorable au moment considéré.

Dans le cas d'un système de téléphonie mobile directe du type où chaque appel est émis par une station émettrice sur une fréquence porteuse, objet de la présente invention, il n'y a pas utilisation de stations de base qui diffuse une voie balise sur une fréquence particulière. Cependant, deux stations mobiles d'un tel système, l'une émettrice d'un appel sur une fréquence porteuse et l'autre réceptrice de cet appel, doivent toutefois, pour que la station mobile réceptrice puisse écouter cet appel, se caler sur cette fréquence porteuse, et être temporellement synchronisées avec la station mobile émettrice. Ainsi, la station mobile émettrice émet non seulement ses données utilisateur mais aussi des données de calage en fréquence et de synchronisation en temps.

La demande de brevet international (WO 0059138) divulgue un système de téléphonie mobile directe où l'utilisation de la fréquence porteuse est divisée temporellement en slots dédiés soit aux données des appels, soit aux données permettant la synchronisation nécessaire à une session de communication.

Dans le cas où un tel système de téléphonie directe est basé sur les normes GSM, une station mobile émettrice émet dans un des *slots* s1 à s7 de chaque trame TDMA relative à une fréquence porteuse, des données utilisateurs (canal logique TCH), dans le *slot* 0 de certaines trames TDMA les données de calage en fréquence (canal FCCH) et dans le *slot* 0 d'autres trames TDMA des données de synchronisation (canal SCH).

De plus, afin de pouvoir se mettre à l'écoute d'un appel, une station réceptrice doit, au préalable, connaître les appels en cours qu'elle peut écouter, c'est-à-dire les appels qui sont émis par les stations émettrices qui se trouvent à sa portée. Une station émettrice est dite à portée d'une station réceptrice lorsque les signaux d'appel que cette station émet peuvent être reçus par la station réceptrice.

Le problème résolu par la présente invention est donc de prévoir un système de téléphonie mobile directe dans lequel au moins une fréquence porteuse, dite fréquence balise, permet à une station réceptrice de connaître les appels qu'elle peut écouter.

A cet effet, l'invention concerne un système de téléphonie mobile directe du type où chaque appel est émis par une station émettrice sur une fréquence porteuse. Le système est caractérisé en ce qu'au moins une desdites fréquences porteuses, dite fréquence balise, reçue par une station réceptrice, porte en outre des données, dites données de désignation d'appels, qui permettent à ladite station réceptrice de connaître les appels qui sont émis par les stations situées à sa portée.

Dans le cas d'un système de téléphonie mobile directe à accès multiple par division de temps, l'utilisation de la fréquence balise est divisée temporellement selon une trame de *slots* dédiés soit aux données de chacun de ces appels, dits *slots* utilisateur, soit aux données de calage en fréquence, respectivement de synchronisation en temps, dits *slots* de fréquence, respectivement de synchronisation. Les *slots* utilisateur relatifs à chacun de ces appels sont alors regroupés dans une multitrame utilisateur réservée par appel et les *slots* de fréquence et de synchronisation sont alors regroupés dans une même multitrame système.

Le système de téléphonie mobile directe est alors caractérisé en ce que ladite multitrame système regroupe en outre, pour chacun de ces appels, au moins un *slot,* dit *slot* de désignation d'appel, qui est dédié à des données permettant de désigner, d'une part, la fréquence porteuse sur laquelle est émise un appel, et d'autre part, la multitrame utilisateur réservée pour cet appel sur cette fréquence porteuse.

Selon une variante, dans le cas où les appels émis par les stations mobiles à poilée de la station réceptrice sont tous portés par la fréquence balise, les données émises au cours d'un *slot* de désignation d'un appel se limite à désigner uniquement la multitrame utilisateur réservée pour cet appel sur cette fréquence balise.

Selon une autre caractéristique de la présente invention, la multitrame système regroupe en outre pour chaque appel émis par une des stations situées à portée de la station réceptrice, au moins un *slot,* dit *slot* de préemption, qui est dédié à des données permettant à ladite station réceptrice de préempter une desdites stations station situées à sa portée.

Selon une autre caractéristique de la présente invention, la multitrame système regroupe en outre pour chaque appel émis par une des stations situées à portée de la station réceptrice au moins un *slot,* dit *slot* d'accusé d'écoute, qui est dédié à des données que ladite station réceptrice est susceptible d'émettre lorsqu'elle est en cours de réception de cet appel.

Par exemple, une station réceptrice peut émettre au cours d'un appel un, voire plusieurs *slot(s)* d'accusé d'écoute des données de synchronisation, dé correction en fréquence ou de désignation d'appel.

Selon une autre caractéristique de la présente invention, les données de calage en fréquence, respectivement de synchronisation, sont émises au cours de *slots* de fréquence, respectivement de synchronisation, positionnés périodiquement dans la multitrame système.

La répétition du *slot* de fréquence et de synchronisation dans la multitrame système permet d'augmenter pour une station réceptrice la rapidité d'acquisition des données de calage en fréquence et de synchronisation.

Dans le cas particulier où les appels sont émis par les stations situées à portée de la station réceptrice sur la même fréquence balise, ces données de calage en fréquence, respectivement de synchronisation, sont émises, au cours de *slots* de fréquence, respectivement de synchronisation, autant de fois par multitrame système que d'appels pouvant être simultanément émis sur cette fréquence balise.

Selon un cas particulier, les données de calage en fréquence émises au cours des *slots* de fréquence sont toutes les mêmes.

Les stations émettrices à portée de la station réceptrice sont alors toutes calées sur la fréquence porteuse de ladite station réceptrice.

Ainsi, une multitrame système d'un système de téléphonie mobile directe selon la présente invention, regroupe pour chaque appel émis par une des stations situées à portée de la station réceptrice un *slot* de fréquence, un *slot* de synchronisation, au moins un *slot* de désignation de l'appel, d'au moins un *slot* de préemption et d'au moins un *slot* d'accusé d'écoute.

Selon un premier mode de réalisation de l'organisation d'une telle multitrame système, les *slots* de cette multitrame système sont regroupés dans le temps par appel, c'est-à-dire que les *slots* de fréquence, de synchronisation, d'accusé d'écoute, de préemption et de désignation relatifs à chaque appel sont positionnés consécutivement dans la multitrame système.

Il peut s'avérer avantageux que les informations de synchronisation de chaque appel soient positionnées à une distance définie du *slot* de fréquence.

Pour cela, selon un deuxième mode de réalisation de l'organisation de la multitrame système, les *slots* de cette multitrame système sont regroupés dans le temps selon les données qui sont émises au cours de ces *slots.*

Par exemple, les *slots* de synchronisation sont positionnés consécutivement au début de la multitrame système, suivis des *slots* de désignation d'appels, suivis des *slots* d'accusé d'écoute, suivis dcs *slots* de préemption.

Selon un troisième mode de réalisation de l'organisation de la multitrame système, les *slots* relatifs à chacun de ces appels sont répartis périodiquement dans la multitrame système.

Une telle organisation des *slots* relatifs à un appel permet de réduire le temps d'acquisition des données relatives à cet appel car la valeur de la période de répartition des *slots* de cet appel définit une distance pré-établie entre chacun de ces *slots* évitant ainsi une scrutation systématique de tous les *slots* de la multitrame système. Ceci est particulièrement avantageux lorsque peu d'appels désignés par la multitrame système sont en cours car dans ce cas un grand nombre de *slots* de la multitrame système n'ont ainsi pas à être scrutés afin d'obtenir une donnée relative à l'un de ces appels.

Selon un premier exemple de ce troisième mode de réalisation, les données permettant à ladite station réceptrice de préempter une desdites stations situées à sa portée sont acheminées au cours d'un seul *slot* de préemption et les données que ladite station réceptrice est susceptible d'émettre lorsqu'elle est en cours de réception de cet appel sont émises au cours d'un seul *slot* d'accusé d'écoute. Le *slot* de synchronisation d'un appel est suivi, selon cet exemple, N *slots* de la multitrame système plus tard, d'un *slot* de désignation de cet appel, suivi N *slots* de la multitrame système plus tard, d'un autre *slot* de désignation de cet appel, s'il existe. Le dernier de ces *slots* de désignation de cet appel est suivi, N *slots* de la multitrame système plus tard, du *slot* de préemption de cet appel, suivi N *slots* de la multitrame système plus tard du *slot* d'accusé d'écoute de cet appel.

Selon un deuxième exemple de ce troisième mode de réalisation, les données permettant à ladite station réceptrice de préempter une desdites stations situées à sa portée sont acheminées au cours d'un seul *slot* de préemption et les données quc ladite station réceptrice est susceptible d'émettre lorsqu'elle est en cours de réception de cet appel sont émises au cours d'un seul *slot* d'accusé d'écoute. Le *slot* de synchronisation d'un appel est suivi, N *slots* de la multitrame système plus tard, du *slot* de préemption de cet appel, suivi N *slots* de la multitrame système plus tard, d'un *slot* de désignation de cet appel, suivi N *slots* de la multitrame système plus tard, du *slot* d'accusé d'écoute de cet appel, suivi des autres *slots* de désignation de cet appel, s'ils existent, séparés les uns des autres de N *slots* de la multitrame système.

Ce dernier exemple est particulièrement avantageux par rapport au premier exemple de ce troisième mode de réalisation, car il permet, en plus, que les données émises par les *slots* de préemption et d'accusé d'écoute d'un appel soient plus rapidement obtenues par une station une fois que celle-ci a obtenu les données de synchronisation émises au cours du *slot* de synchronisation de cet appel.

Selon les modes de réalisation de l'organisation de la multitrame système précédents, les *slots* libres 1 sont situés en fin de multitrame système imposant alors un allongement de la durée d'obtention entre des données portées par les *slots* relatifs à certains appels. Afin de réduire cette durée d'obtention, selon une variante de l'un des modes de réalisation de l'organisation de la multitrame système décrits ci-dessus, lorsqu'au moins deux *slots* de cette multitrame système sont laissés libres, au moins un de ces *slots* libres est positionné ailleurs qu'à la fin de ladite multitrame système.

Lorsque les *slots* de fréquence et de synchronisation sont positionnés côte à côte dans la multitrame système, la station réceptrice peut ne pas avoir suffisamment de temps pour détecter ce *slot* de synchronisation consécutivement à la détection du *slot* de fréquence. Afin de pouvoir effectuer successivement la détection de ces deux *slots,* un *slot* intermédiaire est positionné, selon une variante de l'un des modes de réalisation de l'organisation de la multitrame système ci-dessus, entre chaque *slot* de synchronisation et chaque *slot* de fréquence de la multitrame système.

Dans un système de téléphonie mobile directe, il peut également s'avérer avantageux que chaque appel connu par une station réceptrice soit identifié par un identifiant unique.

Selon une variante de la présente invention, les données de synchronisation émises au cours de *slots* de synchronisation et liées à chaque appel décrivent également l'identification de cet appel.

La présente invention concerne également un signal émis sur une fréquence qui porte les données émises au cours des *slots* de la multitrame système telle que décrite ci-dessus.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 qui est un schéma d'un exemple de trame TDMA du système GSM,
la Fig. 2 qui est un schéma d'un exemple de système de téléphonie directe selon la présente invention, et
les Fig. 3 à 7 qui sont des exemples de modes de réalisation de l'organisation de la multitrame système selon la présente invention.

La Fig. 2 représente un schéma d'un exemple de système de téléphonie mobile directe SYST selon la présente invention. Le système SYST comporte, selon cet exemple, une station mobilc réceptrice RCD et trois stations mobiles TRD1, TRD2 et TRD3 qui émettent chacune un appel sur les fréquences porteuses respectives f1, f2 ct f3. Chaque appel est émis par des signaux radiofréquences d'une puissance donnée qui définit une zone géographique dans laquelle l'appel peut être reçu. De telles zones géographiques sont représentées à la Fig. 2 par des cercles centrés sur chacune des stations émettrices TRD1, TRD2 et TRD3. Selon cet exemple, les stations émettrices TRDi (i=1,2) sont à portée de la station réceptrice RCD car la station RCD se trouve dans la zone géographique définie par l'intersection des cercles centrés sur la station mobile TRD1 et sur la station mobile TRD2. On peut noter que la station émettrice TRD3 n'est pas à portée de la station réceptrice RCD car cette dernière n'est pas dans le cercle centré sur la station TRD3.

Selon une caractéristique du système SYST, au moins une des fréquences porteuses fj (j=1,2), appelée fréquence balise, porte en outre des données de désignation d'appels qui permettent à la station réceptrice RCD de connaître les appels Ai (1=1,2) qui sont émis par les stations TRDi (i=1,2) à sa portée. Par exemple, la fréquence f1 est la fréquence balise qui porte des données de désignation relatives à la fois à l'appel A1 et à l'appel A2. Dans le cas où les appels Ai (i=1,2) sont émis sur la même fréquence porteuse (f1=f2), la fréquence balise est alors cette fréquence porteuse.

Par la suite, l'invention est décrite dans le cas particulier de réalisation où le système de téléphonie mobile directe SYST est du type à accès multiple par division de temps (TDMA). De plus, la fréquence f1 est considérée comme étant là fréquence balise.

On rappelle que dans ce type de système, l'utilisation de la fréquence balise f1 est divisée temporellement en *slots* dédiés soit aux données de chaque appel Ai émis sur une fréquence porteuse fj, on parle alors de *slots* utilisateur, soit aux données de calage en fréquence, respectivement de synchronisation en temps, on parle alors de *slots* de fréquence F, respectivement de *slots* de synchronisation Si, de plus, l'utilisation de chaque fréquence porteuse (autre que la fréquence balise) est divisée temporellement en *slots* dédiés aux données de chaque appel émis sur cette fréquence porteuse. Enfin, les *slots* utilisateur relatifs à chaque appel Ai sont regroupés dans une multitrame utilisateur (quelle que soit la fréquence porteuse sur laquelle ils sont émis) et les *slots* de fréquence F et de synchronisation Si relatifs à l'appel Ai sont regroupés dans une multitrame système M₀ (de la fréquence balise f1) qui est, dans la suite de la description, une multitrame à 51 *slots* de trame. L'invention ne se limite pas à ce type de multitrame et une multitrame comportant un nombre différent de *slots* de trame peut bien évidemment être utilisée.

Les données de synchronisation, nécessaires à la station réceptrice RCD pour se synchroniser en temps avec une station TRDi émettrice d'un appel Ai, et émises au cours d'un *slot* de synchronisation Si, sont toutes identiques selon un mode particulier de réalisation du système SYST.

Selon un autre mode particulier plus avantageux, chaque donnée de synchronisation Si représente en plus l'identification de l'appel Ai. On parle alors d'identifiant IDi de l'appel Ai.

Dans le cas d'un système GSM, les données de synchronisation sont transmises par un élément radio électrique (communément appelé *burst*) de synchronisation, qui contient en outre un numéro de trame permettant à la station réceptrice RCD de connaître la position de chaque *slot* émis dans l'hypertrame. Selon les normes GSM, le numéro de trame a une valeur maximale égale à 26x51x2¹¹ qui est exprimé sur 19 bits afin qu'une station mobile puisse connaître la position d'un *burst* dans l'hypertrame. Dans le cas d'un système SYST basé sur les normes GSM, les inventeurs ont observé que seule la structuration en multitrames est nécessaire et suffisante. Pour connaître la position d'un *burst* par rapport aux différentes multitrames, la numérotation des trames doit alors être au minimum égale à la répétition de l'alignement de multitrames. En effet, pour la trame numérotée 0, toutes les multitrames à 26, 51, 102 et 104 trames sont alignées. Ce réalignement a également lieu toutes les 5304 trames, valeur obtenue par le plus petit multiple commun à 26, 51,102 et 104, à savoir 17x3x13x2x2x2.

La valeur maximale du numéro de trame est alors égale à 5304 qui peut s'exprimer sur 10 bits, laissant donc vacants 9 bits qui sont utilisés pour représenter l'identifiant IDi.

Selon ce cas particulier de réalisation où le système de téléphonie mobile directe SYST est du type TDMA, la multitrame système M₀ regroupe en outre, pouf chaque appel Ai émis par une station TRDi, au moins un *slot* Di de désignation de l'appel Ai, qui est dédié à des données permettant de désigner la multitrame utilisateur réservée à cet appel.

Dans le cas où deux fréquences porteuses fm et fn sur lesquelles sont émis respectivement les appels Am et An sont différentes, au cours du *slot* Dm, respectivement Dn, sont émises des données qui permettent à la station réceptrice RCD de déterminer d'une part la fréquence porteuse fin, respectivement fn, et, d'autre part, la multitrame utilisateur réservée sur cette fréquence porteuse fin, respectivement fn.

Dans le cas où les appels Am et An sont émis sur la fréquence balise, en l'occurrence la fréquence f1, au cours du *slot* Dm, respectivement Dn, sont émises des données qui permettent à la station réceptrice RCD de déterminer la multitrame utilisateur réservée sur cette fréquence balise f1. La station réceptrice RCD connaît alors, au préalable, la fréquence sur laquelle sont émis ces appels (fréquence balise).

Selon unc autre caractéristique du système SYST, la multitrame système M₀ regroupe en outre pour chaque appel Ai au moins un *slot* de préemption Pi qui est dédié à des données permettant à la station réceptrice RCD de préempter la station TRDi qui est en cours d'émission de l'appel Ai. La préemption d'une station en cours d'émission d'un appel par la station réceptrice RCD consiste à obliger la station émettrice à arrêter d'émettre son appel et à libérer les ressources radio qu'elle utilise pour émettre cet appel. La station réceptrice RCD peut alors récupérer ces ressources radio pour pouvoir émettre un nouvel appel.

Selon une autre caractéristique du système SYST, la multitrame système M₀ regroupe en outre pour chaque appel Ai au moins un *slot* d'accusé d'écoute Ri qui est dédié à des données que la station réceptrice RCD est susceptible d'émettre lorsqu'elle est en cours de réception de l'appel Ai.

Par exemple, la station réceptrice RCD peut émettre au cours d'un *slot* d'accusé d'écoute des données de synchronisation, de correction en fréquence ou de désignation d'appel.

Selon une autre caractéristique de la présente invention, les données de calage en fréquence sont émises au cours de *slots* de fréquence F positionnés périodiquement dans la multitrame système M₀. Par exemple, dans le cas où les appels sont émis par les stations TRDi situées à portée de la station réceptrice RCD sur la même fréquence balise f1, les données de calage en fréquence sont émises autant de fois par multitrame système M₀ que d'appels pouvant être simultanément émis sur cette fréquence balise.

Selon une autre caractéristique de la présente invention, dans le cas où les appels sont émis par les stations TRDi situées à portée de la station réceptrice RCD sur la même fréquence balise f1, les mêmes données de calage en fréquence sont émises au cours des *slots* de fréquence F.

Selon un premier mode de réalisation de l'organisation de la multitrame système M₀, les *slots* de la multitrame système M₀ relatifs à chaque appel Ai sont regroupés dans le temps par appel.

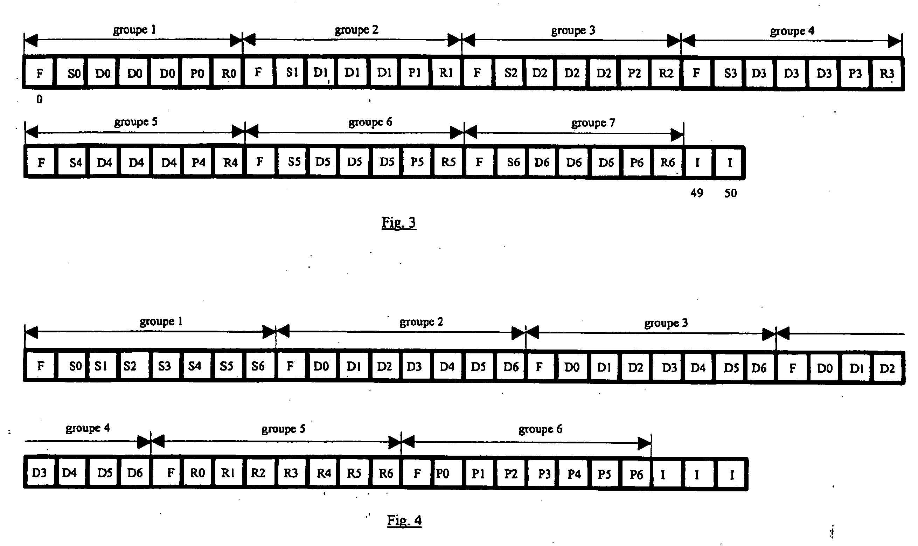

La Fig. 3 représente un exemple de ce premier mode de réalisation de l'organisation de la multitrame système M₀ correspondant au cas où 7 appels Ai (i=1,...,7) sont susceptibles d'être émis simultanément par des stations TRDi sur la fréquence balise f1. Selon ce mode de réalisation, les *slots* de la multitrame système M₀ sont regroupés en 7 groupes i de 7 *slots* relatifs chacun à un appel Ai. Un groupe i de 7 *slots* débute par un *slot* de fréquence F, suivi d'un *slot* de synchronisation Si. De plus, selon cet exemple les données de désignation de l'appel Ai sont émises sur 3 *slots* Di de désignation de l'appel Ai, les données permettant à la station réceptrice RCD de préempter la station TRDi qui est en cours d'émission de l'appel Ai sont émises sur un seul *slot* de préemption et les données que la station réceptrice RCD est susceptible d'émettre lorsqu'elle est en cours de réception de l'appel Ai sont émises sur un seul *slot* d'accusé d'écoute. Ces *slots* Di sont alors positionnés à la-suite du *slot* de synchronisation Si. Le dernier des 3 *slots* Di est suivi d'un *slot* de préemption Pi qui est lui-même suivi d'un *slot* d'accusé d'écoute Ri.

Ainsi, selon cet exemple, 49 (7x7) *slots* sur 51 de la multitrame système M₀ sont dédiés, laissant libres les deux derniers de ces *slots* positionnés aux positions 49 et 50 de la multitrame système M₀ qui sont, dans la suite de la description, appelés *slots* libres et notés I.

Lorsque peu d'appels sont en cours d'émission par des stations TRDi à portée de la station réceptrice RCD, ce premier mode de réalisation oblige que tous les *slots* de la multitrame système M₀ soient scrutés. En effet, une fois que le premier *slot* de fréquence F (position 0) a été détecté par la station RCD, cette station ne connaît pas les *slots* de la multitrame système M₀ qui portent les données relatives à ces appels.

Selon un deuxième mode de réalisation de l'organisation de la multitrame système M₀, les *slots* de cette multitrame sont regroupés dans le temps selon les données qui sont émises au cours de ces *slots.*

La Fig. 4 représente un exemple de ce deuxième mode de réalisation de l'organisation de la multitrame système M₀ qui reprend les hypothèses de l'exemple donné à la Fig. 3. Selon l'exemple de la Fig. 4, tous les *slots* de synchronisation Si sont positionnés dans le groupe 1 de la multitrame système M₀, c'est-à-dire celui au début la multitrame système, les trois *slots* Di de désignation des appels Ai sont positionnés dans les trois groupes suivants (2, 3 et 4), les *slots* d'accusé d'écoute Ri sont positionnés dans le groupe 5, c'est-à-dire dans le groupe suivant le dernier groupe dans lequel sont positionnés les *slots* Di de désignation des appels Ai, et les *slots* Pi de préemption sont positionnés dans le dernier groupe 6 de la multitrame M₀.

Ainsi, lorsque peu d'appels sont en cours d'émission par des stations TRDi à portée de la station réceptrice RCD, et lorsque la station RCD a détecté le premier *slot* de fréquence F de la multitrame système M₀, elle n'aura à scruter que les *slots* de synchronisation du groupe 1 afin de savoir quels sont les appels qu'elle peut écouter et donc quels sont les *slots* de la multitrame système M₀ qu'elle doit scruter pour obtenir les données relatives à ces appels en cours. Le temps d'obtention des données relatives aux appels en cours d'émission par des stations TRDi à portée de la station réceptrice RCD est ainsi diminué.

On peut noter que selon cette organisation de la multitrame système où la multitrame système regroupe 51 *slots,* 6 groupes de 8 *slots* sont alors définis au lieu de 7 groupes de 7 *slots* selon l'exemple d'organisation donnée à la Fig. 3. La conséquence est qu'au lieu d'obtenir 2 *slots* libres selon l'exemple donné à la Fig. 3, on obtient 3 *slots* libres I.

Selon un troisième mode de réalisation de l'organisation de la multitrame système, les *slots* relatifs à chacun des appels Ai sont répartis périodiquement dans la multitrame système M₀.

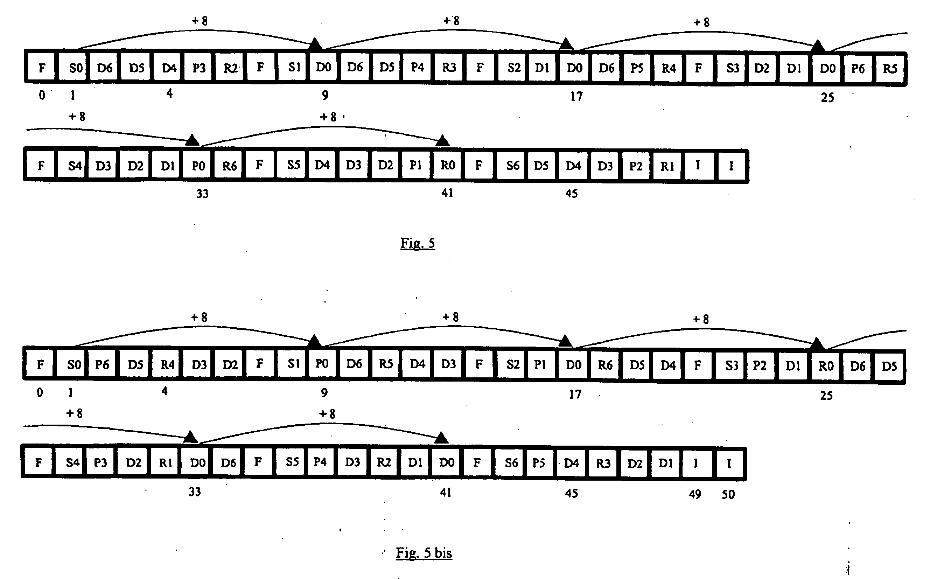

La Fig. 5 représente un premier exemple de ce troisième mode de réalisation de l'organisation de la multitrame système M₀ qui reprend les hypothèses de l'exemple donné à la Fig. 3. Afin d'illustrer la périodicité de la répartition des *slots* relatifs à un appel, prenons l'exemple des *slots* relatifs à l'appel A0 et une valeur de périodicité de *8 slots.* Le *slot* de synchronisation S0, positionné à la position 1 de la multitrame M₀, est suivi, 8 *slots* de la multitrame système plus tard, d'un *slot* de désignation D0, lui-même suivi, 8 *slots* de la multitrame système plus tard, du deuxième *slot* de désignation D0, lui-même suivi 8 *slots* de la multitrame système plus -tard, du troisième *slot* de désignation D0. Ce dernier *slot* de désignation D0 est suivi, 8 *slots* de la multitrame système plus tard, du *slot* de préemption P0 lui-même, suivi 8 *slots* de la multitrame plus tard, du *slot* d'accusé d'écoute R0.

On peut noter dans cet exemple où la multitrame système regroupe 51 *slots,* que la valeur de périodicité de répartition des *slots* situés en fin de multitrame M₀ est augmentée du nombre de *slots* libres I en fin de multitrame, en l'occurrence 2. Ainsi, par exemple, le *slot* de désignation d'appel D4 relatif à l'appel A4 et positionné à la position 45 est séparé de (8+2) *slots* d'un *slot* de désignation d'appel D4 positionné à la position 4 (de la multitrame système suivante). De plus, le *slot* d'accusé d'écoute R0 relatif à l'appel A0 et positionné à la position 41 est séparé de (8+2+1) du *slot* de synchronisation S0. Ce *slot* S₀ est positionné à la position 1 (de la multitrame système suivante) car il ne peut être situé à (8+2) *slots* du *slot* R0 qui correspondrait alors à la position 0 qui est réservée pour le *slot* de fréquence F.

La Fig. 5bis représente un deuxième exemple de ce troisième mode de réalisation de l'organisation de la multitrame système M₀ qui reprend les hypothèses de l'exemple donné à la Fig. 5. Le *slot* de synchronisation S0 positionné à la position 1 de la multitrame M₀ est suivi, 8 *slots* de la multitrame système plus tard, du *slot* de préemption P0, lui-même suivi, 8 *slots* de la multitrame système plus tard, du premier *slot* de désignation D0, lui-même suivi, 8 *slots* de la multitrame système plus tard, du *slot* d'accusé d'écoute R0, lui-même suivi, 8 *slots* de la multitrame système plus tard, du deuxième *slot* de désignation D0, lui-même suivi, 8 *slots* de la multitrame système plus tard du troisième *slot* de désignation D0.

On peut noter dans cet exemple où la multitrame système regroupe 51 *slots,* que la valeur de périodicité de répartition des *slots* situés en fin de multitrame M₀ est toujours augmentée du nombre de *slots* libres I en fin de multitramc, en l'occurrence 2. Ainsi, par exemple, le *slot* de désignation d'appel D4 relatif à l'appel A4 et positionné à la position 45 est séparé de (8+2) *slots* du *slot* d'accusé d'écoute R4 positionné à la position 4 (de la multitrame suivante).

Selon les modes de réalisation de l'organisation de la multitrame système décrits en relation avec les Fig. 3, 4, 5 et 5bis, les *slots* libres I sont situés en fin de multitrame système M₀ imposant alors un allongement de la durée (8 *slots*) séparant l'obtention des données portées par les *slots* relatifs à certains appels, notamment le *slot* de désignation d'appel R4 relatif à l'appel A4 comme cela a été précédemment expliqué, comparée à la durée (8+2 *slots*) séparant l'obtention des données portées par les *slots* relatifs à d'autres appels. Afin de réduire cette durée d'obtention allongée, selon une variante de l'un des modes de réalisation de l'organisation de la multitrame système M₀ décrits en relation avec les Fig. 3, 4 5 et 5bis, lorsque au moins deux *slots* I de la multitrame système M₀ sont laissés libre, au moins un de ces *slots* libres I est positionné ailleurs qu'à la fin de la multitrame système M₀.

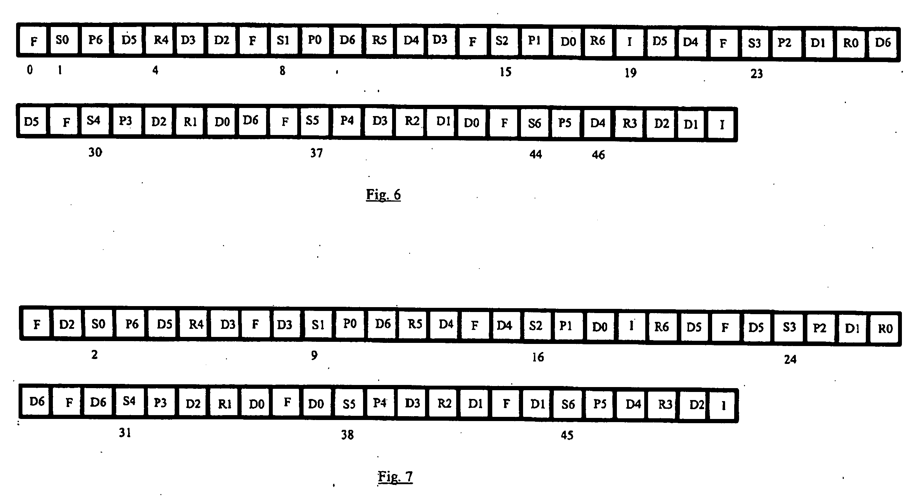

La Fig. 6 représente un exemple d'une telle variante dans le cas du deuxième exemple du deuxième mode de réalisation décrit à la Fig. 5bis. Cependant, on comprendra que cette variante peut s'appliquer aux autres modes de réalisation décrits en relation avec les Fig. 3, 4 et 5. Les éléments de la Fig. 6 qui portent les mêmes références que celles des éléments de la Fig. 5bis désignent les mêmes éléments.

Selon la Fig. 5bis, deux *slots* I sont laissés libres. Ils sont positionnés aux positions 49 et 50 de la multitrame système M₀. Selon l'exemple de la Fig. 6, le *slot* qui était positionné à la position 49 est maintenant positionné à la position 19 de la multitrame système M₀. Ainsi, selon cet exemple, la durée séparant deux *slots* relatifs au même appel est maintenant limité à (8+1) *slots,* quel que soit l'appel, limitant ainsi la disparité de la durée d'obtention des données relatives aux appels qui se produisaient dans les modes de réalisation de l'organisation de la multitrame système M₀ précédents.

Lorsque les *slots* de fréquence F et de synchronisation Si sont positionnés côte à côte dans la multitrame système M₀, la station réceptrice RCD peut ne pas avoir suffisamment de temps pour détecter ce *slot* de synchronisation Si consécutivement à la détection du *slot* de fréquence F car elle doit notamment, pour cela, changer de mode de détection. Afin de pouvoir laisser à la station réceptrice RCD le temps d'effectuer ces changements de modes, un *slot* intermédiaire est positionné, selon une variante de l'un des modes de réalisation de l'organisation de la multitrame système Mn décrits en relation avec les Fig. 3, 4, 5, 5bis et 6, entre chaque *slot* de fréquence F et chaque *slot* de synchronisation Si de la multitrame système M₀.

La Fig. 7 représente un exemple d'une telle organisation de la multitrame système M₀ dans le cas du mode de réalisation décrit à la Fig. 6. Cependant, on comprendra que cette variante peut s'appliquer aux autres modes de réalisation décrits en relation avec les Fig. 3, 4, 5 et 5bis. Les éléments de la Fig. 7 qui portent les mêmes références que celles des éléments de la Fig. 6 désignent les mêmes éléments.

Selon l'exemple de la Fig. 7, les *slots* de synchronisation S0, S1, S2, S3, S4, S5, S6 et S7 sont respectivement aux positions 2, 9, 16, 24, 31, 38 et 45 et sont séparés d'un *slot* de fréquence F respectivement par les *slots* D2, D3, D4, D5, D6, D0 et D1.

## Revendications

1. Système de téléphonie mobile directe du type où chaque appel est émis par une station émettrice sur une fréquence porteuse, l'utilisation d'au moins une desdites fréquences porteuses, dite fréquence balise, reçue par une station réceptrice, étant divisée temporellement en *slots* dédiés soit aux données de chacun desdits appels, dits *slots* utilisateur, soit aux données de calage en fréquence, respectivement de synchronisation en temps, dits *slots* de fréquence, respectivement *slots* de synchronisation, les *slots* utilisateur relatifs à chacun desdits appels étant regroupés dans une multitrame dite multitrame utilisateur réservée par appel et les *slots* de fréquence et de synchronisation étant regroupés dans une même multitrame dite multitrame système, **caractérisé en ce que** ladite multitrame système regroupe en outre pour chaque appel émis par une station située à portée de ladite station réceptrice au moins un *slot,* dit *slot* de désignation d'appel, qui est dédié à des données permettant de désigner les ressources radio utilisées par ledit appel.

2. Système de téléphonie mobile directe selon la revendication 1, un appel étant émis par une station située à portée de ladite station réceptrice sur ladite fréquence balise, **caractérisé en ce que** lesdites données permettant de désigner les ressources radio utilisées par ledit appel sont des données permettant de désigner la multitrame utilisateur réservée pour ledit appel sur ladite fréquence balise.

3. Système de téléphonie mobile directe selon la revendication 1, un appel étant émis par une station située à portée de ladite station réceptrice sur une fréquence porteuse autre que ladite fréquence balise, **caractérisé en ce que** lesdites données permettant de désigner les ressources radio utilisées par ledit appel sont d'une part, des données permettant de désigner ladite autre fréquence porteuse, et d'autre part, des données permettant de désigner la multitrame utilisateur réservée pour ledit appel sur ladite autre fréquence porteuse.

4. Système de téléphonie mobile directe selon l'une des revendications 1 à 3, **caractérisé en ce que** ladite multitrame système regroupe en outre pour chaque appel émis par une des stations situées à portée de la station réceptrice au moins un *slot,* dit *slot* de préemption, qui est dédié à des données permettant à ladite station réceptrice de préempter une desdites stations qui est à sa portée.

5. Système de téléphonie mobile directe selon l'une des revendications 1 à 4, **caractérisé en ce que** la multitrame système regroupe en outre pour chaque appel émis par une des stations situées à portée de la station réceptrice au moins un *slot,* dit *slot* d'accusé d'écoute, qui est dédié à des données que ladite station réceptrice est susceptible d'émettre lorsqu'elle est en cours de réception de cet appel.

6. Système de téléphonie mobile directe selon l'une des revendications 1 à 5, **caractérisé en ce que** des données de calage en fréquence, respectivement de synchronisation, sont émises au cours de *slots* de fréquence, respectivement de synchronisation, positionnés périodiquement dans la multitrame système.

7. Système de téléphonie mobile directe selon la revendication 6, chaque appel étant émis par une des stations situées à portée de la station réceptrice sur ladite fréquence balise, **caractérisé en ce que** lesdites données de calage fréquence et de synchronisation sont émises autant de fois par multitrame système que d'appels pouvant être simultanément émis sur ladite fréquence balise.

8. Système de téléphonie mobile directe selon la revendication 6 ou 7, **caractérisé en ce que** lesdites données de calage en fréquence sont toutes les mêmes.

9. Système de téléphonie mobile directe selon l'une des revendications 1 à 8, **caractérisé en ce que** lesdits *slots* de ladite multitrame système sont regroupés dans le temps par appel.

10. Système de téléphonie mobile directe selon l'une des revendications 1 à 8, **caractérisé en ce que** lesdits *slots* de ladite multitrame système sont regroupés dans le temps selon les données qui sont émises au cours desdits *slots.*

11. Système de téléphonie mobile directe selon la revendication 10, **caractérisé en ce que** les *slots* de synchronisation de ladite multitrame système sont positionnés consécutivement au début de ladite multitrame système, suivis des *slots* de désignation d'appels de ladite multitrame système, suivis des *slots* d'accusé d'écoute de ladite multitrame système, suivis des *slots* de préemption de ladite multitrame système.

12. Système de téléphonie mobile directe selon l'une des revendications 1 à 8, **caractérisé en ce que** lesdits *slots* de ladite multitrame système relatifs à chacun des appels émis par une station située à portée de la station réceptrice sont répartis périodiquement dans la multitrame système.

13. Système de téléphonie mobile directe selon la revendication 12, les données permettant à ladite station réceptrice de préempter une desdites stations qui est à sa portée étant émises sur un seul *slot* de préemption et les données que ladite station réceptrice est susceptible d'émettre lorsqu'elle est en cours de réception de cet appel étant émises sur un seul *slot* d'accusé d'écoute, la valeur de la période de répétition étant égale à N, **caractérisé en ce que** le *slot* de synchronisation de ladite multitrame dudit appel est suivi, N *slots* de la multitrame système plus tard, d'un *slot* de désignation dudit appel, suivi N *slots* de la multitrame système plus tard, d'un autre *slot* de désignation dudit appel, s'il existe, le dernier desdits *slots* de désignation étant suivi, N *slots* de la multitrame système plus tard, du *slot* de préemption dudit appel, suivi N *slots* de la multitrame système plus tard du *slot* d'accusé d'écoute dudit appel.

14. Système de téléphonie mobile directe selon la revendication 12, les données permettant à ladite station réceptrice de préempter une desdites stations qui est à sa portée étant émises sur un seul *slot* de préemption et les données que ladite station réceptrice est susceptible d'émettre lorsqu'elle est en cours de réception de cet appel étant émises sur un seul *slot* d'accusé d'écoute, **caractérisé en ce que** le *slot* de synchronisation dudit appel est suivi, N *slots* de la multittame système plus tard, du *slot* de préemption dudit appel, suivi N *slots* de la multitrame système plus tard, d'un *slot* de désignation dudit appel, suivi N *slots* de la multitrame système plus tard, du *slot* d'accusé d'écoute dudit appel suivi des autres *slots* de désignation dudit appel, s'ils existent, séparés les uns des autres de N *slots* de la multitrame système.

15. Système de téléphonie mobile directe selon l'une des revendications 1 à 14, au moins deux *slots* de ladite multitrame système étant laissés libres, **caractérisé en ce qu'**au moins un desdits *slots* laissés libres est positionné ailleurs qu'à la fin de ladite multitrame système.

16. Système de téléphonie mobile directe selon l'une des revendications 1 à 15, **caractérisé en ce qu'**un *slot* intermédiaire est positionné entre chaque *slot* de synchronisation et chaque *slot* de fréquence de ladite multitrame système.

17. Système de téléphonie mobile directe selon l'une des revendications 1 à 16, **caractérisé en ce que** les données de synchronisation en temps liées à un appel décrivent également un identifiant dudit appel.

## Claims

1. Direct-mode mobile phone system of the type in which each call is transmitted by a transmitting station over a carrier frequency, the use of at least one of said carrier frequencies, known as a beacon frequency, received by a receiving station, being divided into time slots dedicated either to the data of each of the said calls, known as user slots, or to the frequency setting data, or time synchronisation data, referred to as frequency slots, or synchronisation slots, the user slots relating to each of the said calls being combined in a multiframe known as a user multiframe reserved for each call, and the frequency and synchronisation slots being combined in a single multiframe known as a system multiframe, **characterised in that** the said system multiframe also combines, for each call transmitted by a station located within range of the said receiving station, at least one slot known as the call designation slot which is dedicated to data that make it possible to designate the radio resources used by the said call.

2. Direct-mode mobile phone system according to claim 1, a call being transmitted by a station located within range of said receiving station over said beacon frequency, **characterised in that** the said data that make it possible to designate the radio resources used by said call are data that make it possible to designate the user multiframe reserved for said call over said beacon frequency.

3. Direct-mode mobile phone system according to claim 1, a call being transmitted by a station located within range of said receiving station over a carrier frequency other than said beacon frequency, **characterised in that** the said data that make it possible to designate the radio resources used by said call are, on the one hand, data that make it possible to designate said other carrier frequency and, on the other hand, data that make it possible to designate the user multiframe reserved for said call over said other carrier frequency.

4. Direct-mode mobile phone system according to one of claims 1 to 3, **characterised in that** the said system multiframe further combines, for each call transmitted by one of the stations located within range of the receiving station, at least one slot, known as a pre-emption slot, which is dedicated to data that enable the said receiving station to pre-empt one of the said stations which is within range of it.

5. Direct-mode mobile phone system according to one of claims 1 to 4, **characterised in that** the system multiframe further combines for each call transmitted by one of the stations located within range of the receiving station at least one slot, known as the heard-acknowledgement slot, which is dedicated to data that the said receiving station is capable of transmitting when it is in the process of receiving this call.

6. Direct-mode mobile phone system according to one of claims 1 to 5, **characterised in that** frequency setting or synchronisation data are transmitted during frequency slots, or synchronisation slots, positioned periodically within the system multiframe.

7. Direct-mode mobile phone system according to claim 6, each call being transmitted by one of the stations located within range of the receiving station on said beacon frequency, **characterised in that** the said frequency setting and synchronisation data are transmitted as many times by the system multiframe as the number of calls that can be simultaneously transmitted over said beacon frequency.

8. Direct-mode mobile phone system according to claim 6 or 7, **characterised in that** the said frequency setting data are all the same.

9. Direct-mode mobile phone system according to one of claims 1 to 8, **characterised in that** the said slots of said system multiframe are grouped in time per call.

10. Direct-mode mobile phone system according to one of claims 1 to 8, **characterised in that** the said slots of said system multiframe are grouped in time according to the data that are transmitted during said slots.

11. Direct-mode mobile phone system according to claim 10, **characterised in that** the synchronisation slots of said system multiframe are positioned consecutively to the start of said system multiframe, followed by call designation slots of said system multiframe, followed by heard-acknowledgement slots of said system multiframe, followed by pre-emption slots of said system multiframe.

12. Direct-mode mobile phone system according to one of claims 1 to 8, **characterised in that** the said slots of said system multiframe relating to each of the calls transmitted by a station located within range of the receiving station are distributed periodically within the system multiframe.

13. Direct-mode mobile phone system according to claim 12, wherein the data that enable the said receiving station to pre-empt one of the said stations within range of it are transmitted over a single pre-emption slot and the data that the said receiving station is capable of transmitting when it is in the process of receiving this call are transmitted over a single heard-acknowledgement slot, the value of the repeat period being equal to N, **characterised in that** the synchronisation slot of said multiframe of said call is followed, N slots of the system multiframe later, by a designation slot of said call, followed, N slots of the system multiframe later, by another designation slot of said call, if it exists, the last of the said designation slots being followed, N slots of the system multiframe later, by the pre-emption slot of the said call, followed, N slots of the system multiframe later, by the heard-acknowledgement slot of the said call.

14. Direct-mode mobile telephone system according to claim 12, wherein the data enabling said receiving station to pre-empt one of the said stations within range of it are transmitted over a single pre-emption slot and the data that the said receiving station is capable of transmitting when it is in the process of receiving this call are transmitted over a single heard-acknowledgement slot, **characterised in that** the synchronisation slot of the said call is followed, N slots of the system multiframe later, by the pre-emption slot of the said call, followed N slots of the system multiframe later by a designation slot for the said call, followed N slots of the system multiframe later by the heard acknowledgement slot of the said call, followed by the other designation slots of the said call, if they exist, separated from one another by N slots of the system multiframe.

15. Direct-mode mobile telephone system according to one of claims 1 to 14, at least two slots of said system multiframe being left free, **characterised In that** at least one of the said slots left free is positioned other than at the end of said system multiframe.

16. Direct-mode mobile telephone system according to one of claims 1 to 15, **characterised in that** an intermediate slot is positioned between each synchronisation slot and each frequency slot of said system multiframe.

17. Direct-mode mobile telephone system according to one of claims 1 to 16, **characterised in that** the time synchronisation data linked to a call also describe an identifier of said call.

## Patentansprüche

1. Direktes Mobiltelefonie-System von der Art, bei der jeder Anruf von einer Sendestation auf einer Trägerfrequenz gesendet wird, wobei die Verwendung mindestens einer der Trägerfrequenzen, Bakenfrequenz genannt, die von einer Empfangsstation empfangen wird, zeitlich in *Slots* aufgeteilt ist, die entweder den Daten jedes Anrufs, Benutzer-Slots genannt, oder den Frequenzeinstellungs- bzw. Zeitsynchronisationsdaten, Frequenz-*Slots* bzw. Synchronisations-*Slots* genannt, zugeordnet sind, wobei die Benutzer-*Slots* bezüglich jedes der Anrufe in einem Mehrfachrahmen zusammengefasst sind, pro Anruf reservierter Benutzer-Mehrfachrahmen genannt, und die Frequenz- und Synchronisations-*Slots* in einem gleichen Mehrfachrahmen zusammengefasst sind, System-Mehrfachrahmen genannt, **dadurch gekennzeichnet, dass** der System-Mehrfachrahmen außerdem für jeden Anruf, der von einer in Reichweite der Empfangsstation befindlichen Station gesendet wird, mindestens einen *Slot*, Anrufbezeichnungs-*Slot* genannt, zusammenfasst, der Daten zugeordnet ist, die es ermöglichen, die vom Anruf verwendeten Funkressourcen zu bezeichnen.

2. Direktes Mobiltelefonie-System nach Anspruch 1, wobei ein Anruf von einer in Reichweite der Empfangsstation befindlichen Station auf der Bakenfrequenz gesendet wird, **dadurch gekennzeichnet, dass** die Daten, die es ermöglichen, die vom Anruf verwendeten Funkressourcen zu bezeichnen, Daten sind, die es ermöglichen, den für den Anruf auf der Bakenfrequenz reservierten Benutzer-Mehrfachrahmen zu bezeichnen.

3. Direktes Mobiltelefonie-System nach Anspruch 1, wobei ein Anruf von einer in Reichweite der Empfangsstation befindlichen Station auf einer anderen Trägerfrequenz als der Bakenfrequenz gesendet wird, **dadurch gekennzeichnet, dass** die Daten, die es ermöglichen, die vom Anruf verwendeten Funkressourcen zu bezeichnen, einerseits Daten sind, die es ermöglichen, die andere Trägerfrequenz zu bezeichnen, und andererseits Daten sind, die es ermöglichen, den für den Anruf auf der anderen Trägerfrequenz reservierten Benutzer-Mehrfachrahmen zu bezeichnen.

4. Direktes Mobiltelefonie-System nach einem der Ansprüche 1 bis 3, **dadurch gekennzeichnet, dass** der System-Mehrfachrahmen außerdem für jeden von einer der in Reichweite der Empfangsstation befindlichen Stationen gesendeten Anruf mindestens einen Slot zusammenfasst, Bevorrechtigungs-*Slot* genannt, der Daten zugeordnet ist, die es der Empfangsstation ermöglichen, eine der in ihrer Reichweite befindlichen Stationen zu bevorrechtigen.

5. Direktes Mobiltelefonie-System nach einem der Ansprüche 1 bis 4, **dadurch gekennzeichnet, dass** der System-Mehrfachrahmen außerdem für jeden von einer der in Reichweite der Empfangsstationen befindlichen Stationen gesendeten Anruf einen *Slot* zusammenfasst, Hörbestätigungs-*Slot* genannt, der Daten zugeordnet ist, die die Empfangsstation senden kann, während sie diesen Anruf empfängt.

6. Direktes Mobiltelefonie-System nach einem der Ansprüche 1 bis 5, **dadurch gekennzeichnet, dass** Frequenzeinstellungs- bzw. Synchronisationsdaten während Frequenz- bzw. Synchronisations-*Slots* gesendet werden, die periodisch im System-Mehrfachrahmen positioniert sind.

7. Direktes Mobiltelefonie-System nach Anspruch 6, wobei jeder Anruf von einer der in Reichweite der Empfangsstation befindlichen Stationen auf der Bakenfrequenz gesendet wird, **dadurch gekennzeichnet, dass** die Frequenzeinstellungs- und Synchronisationsdaten ebenso oft vom System-Mehrfachrahmen gesendet werden, wie Anrufe gleichzeitig auf der Bakenfrequenz gesendet werden können.

8. Direktes Mobiltelefonie-System nach Anspruch 6 oder 7, **dadurch gekennzeichnet, dass** die Frequenzeinstellungsdaten alle gleich sind.

9. Direktes Mobiltelefonie-System nach einem der Ansprüche 1 bis 8, **dadurch gekennzeichnet, dass** die *Slots* des System-Mehrfachrahmens zeitlich pro Anruf zusammengefasst sind.

10. Direktes Mobiltelefonie-System nach einem der Ansprüche 1 bis 8, **dadurch gekennzeichnet, dass** die *Slots* des System-Mehrfachrahmens zeitlich gemäß den Daten zusammengefasst sind, die während der *Slots* gesendet werden.

11. Direktes Mobiltelefonie-System nach Anspruch 10, **dadurch gekennzeichnet, dass** die Synchronisations-*Slots* des System-Mehrfachrahmens nacheinander zu Beginn des System-Mehrfachrahmens positioniert sind, gefolgt von den Anrufbezeichnungs-*Slots* des System-Mehrfachrahmens, gefolgt von den Hörbestätigungs-*Slots* des System-Mehrfachrahmens, gefolgt von den Bevorrechtigungs-*Slots* des System-Mehrfachrahmens.

12. Direktes Mobiltelefonie-System nach einem der Ansprüche 1 bis 8, **dadurch gekennzeichnet, dass** die *Slots* des System-Mehrfachrahmens bezüglich jedes der von einer in Reichweite der Empfangsstation befindlichen Station gesendeten Anrufs periodisch im System-Mehrfachrahmen verteilt sind.

13. Direktes Mobiltelefonie-System nach Anspruch 12, wobei die Daten, die es der Empfangsstation ermöglichen, eine der in ihrer Reichweite befindlichen Stationen zu bevorrechtigen, auf einem einzigen Bevorrechtigungs-*Slot* gesendet werden, und die Daten, die die Empfangsstation senden kann, während sie diesen Anruf empfängt, auf einem einzigen Hörbestätigungs-*Slot* gesendet werden, wobei der Wert der Wiederholungsperiode gleich N ist, **dadurch gekennzeichnet, dass** auf den Synchronisations-*Slot* des Mehrfachrahmens des Anrufs N *Slots* des System-Mehrfachrahmens später ein Bezeichnungs-*Slot* des Anrufs folgt, auf den N *Slots* des System-Mehrfachrahmens später ein anderer Bezeichnungs-*Slot* des Anrufs folgt, falls es ihn gibt, wobei auf den letzten der Bezeichnungs-*Slots* N *Slots* des System-Mehrfachrahmens später der Bevorrechtigungs-*Slot* des Anrufs folgt, auf den N *Slots* des System-Mehrfachrahmens später der Hörbestätigungs-*Slot* des Anrufs folgt.

14. Direktes Mobiltelefonie-System nach Anspruch 12, wobei die Daten, die es der Empfangsstation ermöglichen, eine der in ihrer Reichweite befindlichen Stationen zu bevorrechtigen, auf einem einzigen Bevorrechtigungs-*Slot* gesendet werden, und die Daten, die die Empfangsstation senden kann, während sie diesen Anruf empfängt, auf einem einzigen Hörbestätigungs-*Slot* gesendet werden, **dadurch gekennzeichnet, dass** auf den Synchronisations-*Slot* des Anrufs N *Slots* des System-Mehrfachrahmens später der Bevorrechtigungs-*Slot* des Anrufs folgt, N *Slots* des System-Mehrfachrahmens später gefolgt von einem Bezeichnungs-*Slot* des Anrufs, N *Slots* des System-Mehrfachrahmens später gefolgt vom Hörbestätigungs-*Slot* des Anrufs, gefolgt von den anderen Bezeichnungs-*Slots* des Anrufs, falls es sie gibt, die voneinander durch N *Slots* des System-Mehrfachrahmens getrennt sind.

15. Direktes Mobiltelefonie-System nach einem der Ansprüche 1 bis 14, wobei mindestens zwei *Slots* des System-Mehrfachrahmens frei gelassen werden, **dadurch gekennzeichnet, dass** mindestens einer der frei gelassenen *Slots* an anderer Stelle als am Ende des System-Mehrfachrahmens positioniert ist.

16. Direktes Mobiltelefonie-System nach einem der Ansprüche 1 bis 15, **dadurch gekennzeichnet, dass** ein Zwischen-*Slot* zwischen jedem Synchronisations-*Slot* und jedem Frequenz-*Slot* des System-Mehrfachrahmens positioniert ist.

17. Direktes Mobiltelefonie-System nach einem der Ansprüche 1 bis 16, **dadurch gekennzeichnet, dass** die mit einem Anruf verbundenen zeitlichen Synchronisationsdaten ebenfalls eine Kennung des Anrufs beschreiben.
